Europäisches Patentamt

European Patent Office

Office européen des brevets

(19)

(11) **EP 1 463 208 A1**

(12) # EUROPEAN PATENT APPLICATION

(43) Date of publication:
**29.09.2004 Bulletin 2004/40**

(51) Int Cl.7: **H04B 1/10**

(21) Application number: **04101163.6**

(22) Date of filing: **22.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **25.03.2003 FI 20030445**

(71) Applicant: **Micro Analog Systems OY**
**02770 Espoo (FI)**

(72) Inventors:
• **Havulinna, Antti**
**04300 Tuusula (FI)**
• **Beeler, Daniel**
**8733 Eschenbach (CH)**

(74) Representative: **Äkräs, Tapio Juhani**
**Kolster Oy Ab, P.O. Box 148,**
**Iso Roobertinkatu 23**
**00121 Helsinki (FI)**

(54) **Antenna circuit**

(57)    The present invention relates to antenna tuning circuits for suppressing noise in differential input applications. The antenna (L) is tuned using two capacitances (C1,C2) connected in series with each other and parallel with the antenna (L).

**FIG. 4**

EP 1 463 208 A1

## Description

FIELD OF THE INVENTION

The present invention relates to antenna tuning circuits for suppressing noise in differential input applications.

BACKGROUND OF THE INVENTION

Antenna tuning circuits are employed for tuning transmitting/receiving antennas to a desired resonant frequency in radio devices. Typical antenna tuning circuits include an amplifier with either a single-ended input or a differential input.

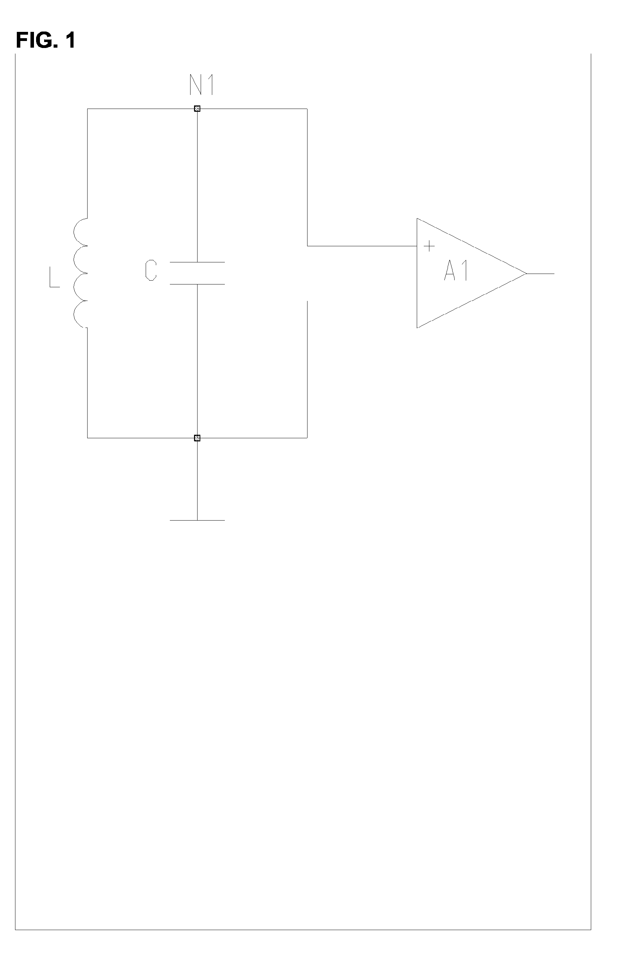

Figure 1 shows a normal connection of an antenna (modelled with an inductance L) to a single-ended input (an amplifier A1). The antenna L is tuned to the resonant frequency with capacitance C.

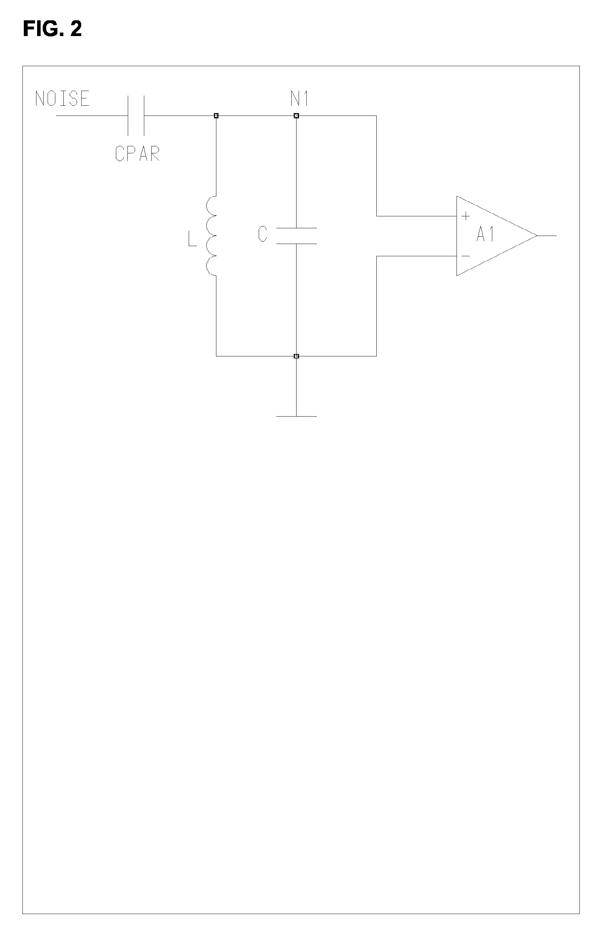

Single-ended connections are always susceptible to common-mode noise coupling via parasitic capacitances. Figure 2 shows a parasitic capacitance Cpar connected to a node N1. Noise is coupled through the capacitance Cpar to the sensitive node N1, but at the same time the noise is attenuated because of the voltage divider formed by the capacitance Cpar and the impedance $Z_{N1}$ of the resonant circuit (and devices connected to it). The transfer function for the noise is given in Equation (1).

$$H_{noise} = \frac{V_{N_1}}{V_{NOISE}} = \frac{Z_{N_1}}{Z_{N_1} + Cpar} \qquad (1)$$

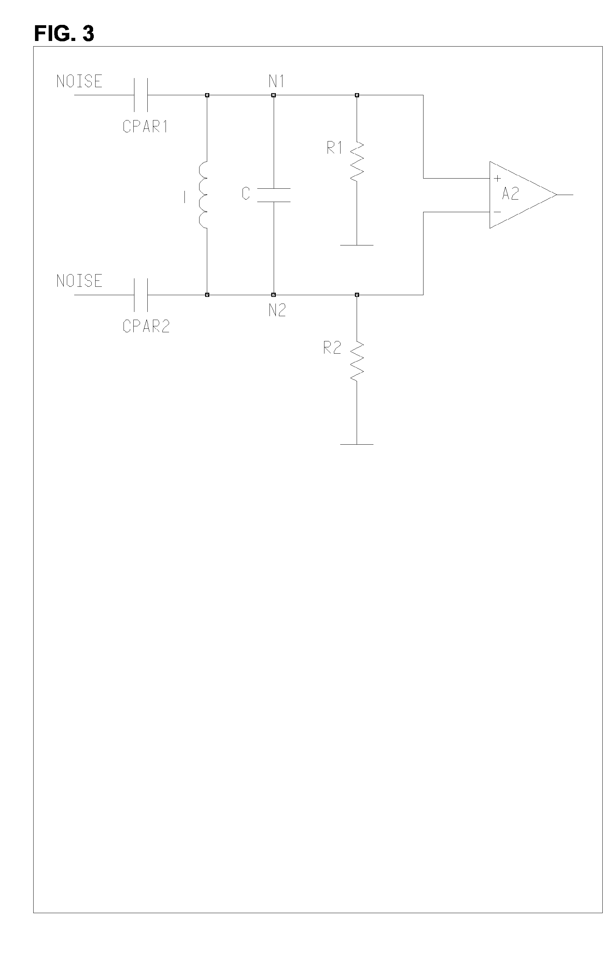

Figure 3 shows a normal connection of an antenna (modeled with an inductance L) to a differential input (an amplifier A2). Here the antenna L is again tuned to its resonant frequency with capacitance C. Resistors R1 and R2 are used for common-mode input biasing (it should be appreciated that the common-mode input biasing can be done in many ways, for example, with mos-transistors but for simplicity resistors are used here). If we assume equal parasitic coupling capacitances Cpar1 and Cpar2 connected to circuit nodes N1 and N2 and a noise source connected to the common point of these capacitances Cpar1 and Cpar2, the noise coupled to the nodes N1 and N2 is equal (assuming ideal value for A2, and R1 equals to R2) and thus only affects the common-mode biasing point of the antenna circuit. The differential signal generated by this noise is ideally zero (assuming that noise couplings to the nodes N1 and N2 equals), and thereby the noise does not change the output signal of the amplifier A2. This is the advantage of using differential signals instead of single-ended signals.

Unfortunately the coupled noise can rarely be considered to be identical in the nodes N1 and N2 due to, for example, the usually somewhat different parasitic capacitance values Cpar1 and Cpar2. As a consequence, there always exists a small differential noise signal that the amplifier A2 will amplify (which is of course not desired). Therefore, as much attenuation as possible for the noise is desired.

SUMMARY OF THE INVENTION

An object of the present invention is to enhance noise attenuation in a differential input antenna tuning circuit.

This object is achieved by an antenna tuning circuit according to claim 1. Various embodiments of the invention are disclosed in the dependent claims.

The invention is based on the idea of tuning an antenna using series-connected capacitances for tuning at a differential input of an antenna tuning circuit, instead of using one capacitance, as in the prior art approach. Due to the series connection of the tuning capacitances, the values of the tuning capacitances can now be twice the value of the single tuning capacitance value C used before. The inductor formed by the antenna still sees the same capacitance value C in parallel, and therefore, it is tuned as before. However, the coupled noise now experiences highly different impedance, and therefore, the voltage dividing function is also altered. At each input of a differential input amplifier, the impedance is now formed by the tuning capacitance in parallel with the rest of the impedance experienced by looking at the input.

The present invention combines the attenuating properties of the single-ended connection and the immunity of the differential connection with common-mode noise while needing only one additional component compared to the conventional differential connection. In addition, the attenuating factor is increased (more than doubled compared to the single-ended connection) because the capacitances in the voltage divider transfer function are twice as large as those that would be used in the normal single-ended connection. Nevertheless, all other properties of the antenna itself may remain unchanged.

BRIEF DESCRIPTION OF THE DRAWINGS

In the following the invention will be described in greater detail by means of exemplary embodiments and with reference to the attached drawings, in which

Figure 1 shows a prior art connection of an antenna inductance to a single-ended input,
Figure 2 shows the circuit of Figure 1 with a parasitic capacitance Cpar connected to a node N1,
Figure 3 shows a prior art connection of an antenna to a differential input,
Figure 4 shows an example of an antenna tuning circuit according to the present invention, and
Figure 5 shows another example of an antenna tuning circuit according to the present invention.

PREFERRED EMBODIMENTS OF THE INVENTION

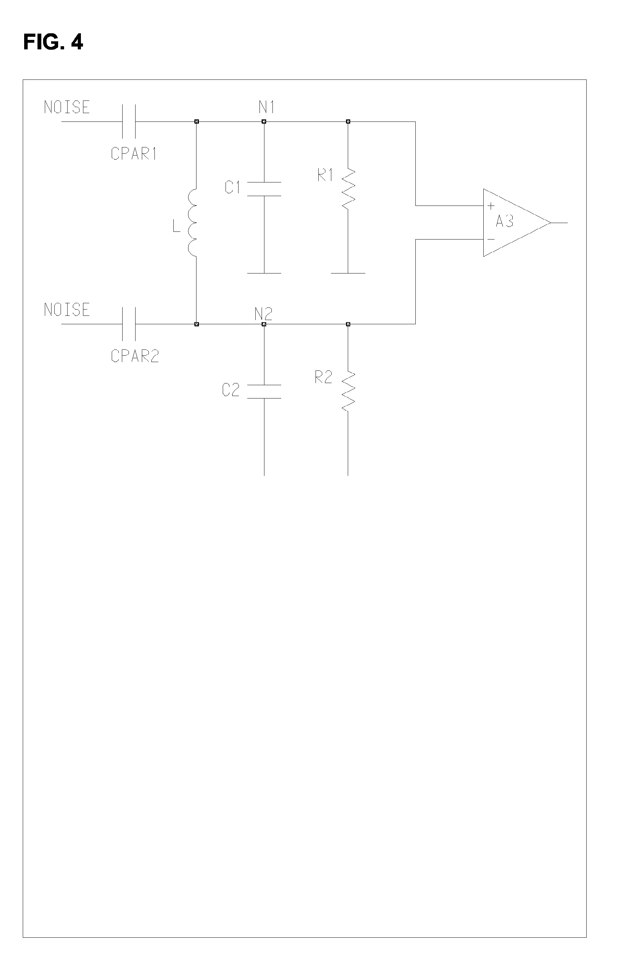

Figure 4 shows an example of a connection of an antenna (modelled with an inductance L) to a differential input (an amplifier A3) in accordance with the principles of the present invention. The differential input of the differential amplifier A3 includes a first input (+) and a second input (-) connected to nodes N1 and N2. Common-mode input biasing is provided by means of resistors R1 and R2. It should be appreciated that the common-mode input biasing can be carried out in many ways, for example, with mos-transistors but for simplicity resistors are used here as an example of suitable biasing means. A resistor R1 is connected between the node N1 and a common potential, typically the ground or another supply potential. A resistor R2 is connected between the node N2 and a common potential (ground). The inductance L (i.e. the antenna) is connected between the nodes N1 and N2. The parasitic coupling capacitances Cpar1 and Cpar2 connected to the circuit nodes N1 and N2 and a noise source(s) connected to these capacitances Cpar1 and Cpar2 are also shown in Figure 4 in order to illustrate the noise coupling to the nodes N1 and N2.

The antenna L is tuned using two capacitances C1 and C2, instead of using a single capacitance, as in the prior art circuit shown in Figure 3. The capacitances C1 and C2 are connected in series and are in parallel with the inductor L, i.e. the antenna. In Figure 4, the capacitance C1 is connected between the node N1 and a common potential, typically the ground or another supply potential. The capacitance C2 is connected between the node N2 and the common potential (ground). Each of the capacitances C1 and C2 can be formed with one or more suitable electronic device, e.g. a capacitor or a mosfet.

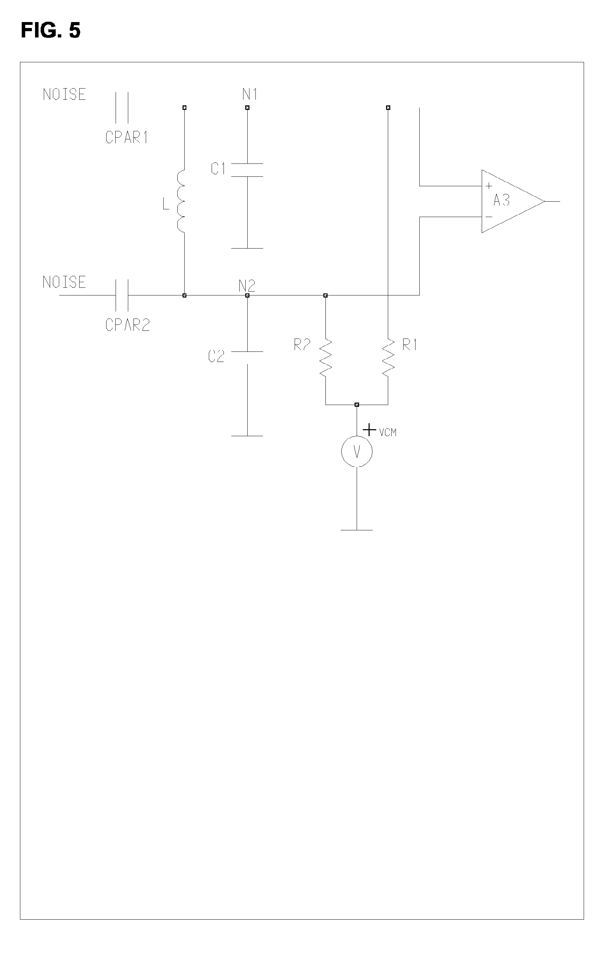

The values of the capacitances C1 and C2 can be twice the value of the capacitance C used in the circuit of Figure 3, because the capacitances C1 and C2 are now connected in series. The total capacitance of the series connected capacitances is Ctot = C1*C2/(C1+C2). If desired, the values of the capacitances C1 and C2 can also be unequal. The inductor L still experiences the same capacitance value C in parallel, so it is tuned as before. The difference between Figure 4 and Figure 1, considering the coupled noise, is that now the noise experiences a large amount of different impedance $Z_{N1}$ or $Z_{N2}$, and therefore, the voltage dividing function is also altered. Instead of only (first degree approximation) the resistor R1 (or respectively R2) the impedance $Z_{N1}$ (or respectively $Z_{N2}$) is now formed by the capacitance C1 (or respectively C2) in parallel with the resistor R1 (or respectively R2) at the node N1 (respectively N2). It should be noted that the common-mode input biasing resistors R1 and R2 do not have to be connected to the same (DC) potential as C1 and C2. It is only required that AC signals experience a common AC, so it could be said that R1 and C1 or R2 and C2 are in parallel for AC signals. Figure 5 shows an example of an antenna tuning circuit according to the present invention wherein the biasing resistors R1 and R2 are connected to a DC potential VCM which is different from the DC potential to which the capacitances C1 and C2 are connected.

The attenuating factor is increased, it is in fact more than doubled compared to the single-ended connection shown in Figure 1, because the capacitances in the voltage divider transfer function are twice as large as those that would be used in the prior art single-ended connection, and there is also a resistor(s) in parallel with the tuning capacitance(s).

In any embodiment of the invention, an improved attenuation is obtained if an L-C antenna resonator circuit formed by the inductor L and the tuning capacitances C1, C2 is designed such that

$$C \gg C_{par}$$

wherein C is the total tuning capacitance provided by the series connected capacitances C1 and C2. For example, the ratio of the tuning capacitance value C of the tuning capacitances to a parasitic capacitance Cpar1 or Cpar2 may be higher than 100, preferably higher than 1000. For example, in AM (amplitude modulated) time-code receiver applications the ratio of C to Cpar may typically be over 1000, so attenuation of over 60 dB is achieved. The actual values of C and Cpar could be 1 nF and 1 pF.

It should be appreciated that the embodiments given in the above description are only examples illustrating the invention. The invention is not intended to be restricted to these examples but modifications and changes can be made without departing from the scope and spirit of the attached claims.

**Claims**

1. An antenna tuning circuit comprising

    a differential amplifier (A3) having a first input and a second input to which an antenna (L) is to be connected,

    common-mode biasing means (R1,R2) connected to the first input and the second input, respectively, **characterized in that**

    a first tuning capacitance (C1) and a second tuning capacitance (C2) are connected to the first input and the second input, respectively, so that the tuning capacitances are in a series connection with each other and parallel with the antenna (L).

2. An antenna tuning circuit according to claim 1, **characterized in that** the first tuning capacitance (C1) is connected between the first input and a first potential, and the second tuning capacitance (C2) is connected between the second input and the first potential.

3. An antenna tuning circuit according to claim 1 or 2, **characterized in that** the common-mode biasing means (R1,R2) exhibit resistances that, from the point of view of AC signal, are connected in parallel with the first and the second tuning capacitances, respectively.

4. An antenna tuning circuit according to any one of the preceding claims, **characterized in that** the capacitance value of each of the first and the second tuning capacitances (C1,C2) is twice a tuning capacitance value C required for an L-C antenna resonator circuit formed by the antenna (L) and the tuning capacitances (C1,C2).

5. An antenna tuning circuit according to claim 4, **characterized in that** the ratio of the tuning capacitance value C of the tuning capacitances (C1,C2) to a parasitic capacitance at the first and the second inputs is higher than 100.

6. An antenna tuning circuit according to claim 5, **characterized in that** the ratio of the tuning capacitance value C of the tuning capacitances (C1,C2) to a parasitic capacitance at the first and the second inputs is higher than 1000.

7. An antenna tuning circuit according to any one of the preceding claims, **characterized in that** the first potential is the ground, a supply potential, or a potential between the ground and a supply potential.

8. An antenna tuning circuit according to any one of the preceding claims, **characterized in that** the common-mode biasing means comprise resistors (R1,R2) or mosfets.

9. An antenna tuning circuit according to any one of the preceding claims, **characterized in that** both the first tuning capacitance (C1) and the second tuning capacitance (C2) are formed by one or more electronic devices.

**FIG. 1**

**FIG. 2**

**FIG. 3**

## FIG. 4

**FIG. 5**

**European Patent Office**

**EUROPEAN SEARCH REPORT**

Application Number

EP 04 10 1163

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 955 038 A (HEPTIG JOHN P ET AL) 4 September 1990 (1990-09-04) * column 13, line 51 - line 58 * ----- | 1-9 | H04B1/10 |
| A | US 5 907 242 A (GARD MICHAEL F) 25 May 1999 (1999-05-25) * figure 5 * ----- | 1-9 | |
| A | US 4 731 585 A (FOX TIMOTHY R) 15 March 1988 (1988-03-15) ----- | | |
| A | US 4 414 690 A (NORDHOLT ERNST H ET AL) 8 November 1983 (1983-11-08) ----- | | |
| A | WO 99/17460 A (MATSUI TAKAHIRO ; WELLPINE COMMUNICATIONS CO LTD (JP)) 8 April 1999 (1999-04-08) ----- | | |

TECHNICAL FIELDS
SEARCHED        (Int.Cl.7)

H01Q
H04B
H03F
H03H

The present search report has been drawn up for all claims

| Place of search | Date of completion of the search | Examiner |
|---|---|---|
| The Hague | 21 June 2004 | Peeters, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 10 1163

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2004

| Patent document cited in search report | | Publication date | Patent family member(s) | | Publication date |
|---|---|---|---|---|---|
| US 4955038 | A | 04-09-1990 | WO | 9006633 A1 | 14-06-1990 |
| US 5907242 | A | 25-05-1999 | AU | 721175 B2 | 22-06-2000 |
| | | | AU | 5059796 A | 28-11-1996 |
| | | | DE | 19611879 A1 | 21-11-1996 |
| | | | GB | 2300921 A | 20-11-1996 |
| US 4731585 | A | 15-03-1988 | DE | 3806371 A1 | 15-09-1988 |
| US 4414690 | A | 08-11-1983 | NL | 8003566 A | 18-01-1982 |
| | | | AU | 544852 B2 | 13-06-1985 |
| | | | AU | 7193581 A | 24-12-1981 |
| | | | CA | 1173559 A1 | 28-08-1984 |
| | | | DE | 3124331 A1 | 01-04-1982 |
| | | | FR | 2485276 A1 | 24-12-1981 |
| | | | GB | 2079064 A ,B | 13-01-1982 |
| | | | HK | 52688 A | 22-07-1988 |
| | | | JP | 1643053 C | 28-02-1992 |
| | | | JP | 3000802 B | 09-01-1991 |
| | | | JP | 57030403 A | 18-02-1982 |
| WO 9917460 | A | 08-04-1999 | JP | 11112374 A | 23-04-1999 |
| | | | WO | 9917460 A1 | 08-04-1999 |

EPO FORM P0459

For more details about this annex : see Official Journal of the European Patent Office, No. 12/82